# EUROPEAN PATENT APPLICATION

(11) **EP 4 503 774 A1**
(43) Date of publication of application: **05.02.2025**
(21) Application number: 23799698.8
(22) Date of filing: 04.05.2023
(51) Int. Cl.: H04W 56/00, H04W 8/18, H04W 60/00

(54) **METHOD AND DEVICE FOR PROVIDING SUBSCRIBER-INFORMATION-BASED SYNCHRONIZATION SERVICE TO TERMINAL IN WIRELESS COMMUNICATION SYSTEM**

(30) Priority: 04.05.2022 KR 20220055324
(71) Applicant: Samsung Electronics Co., Ltd., Suwon-si, Gyeonggi-do 16677 (KR)
(72) Inventor: MOON, Sangjun, Suwon-si, Gyeonggi-do 16677 (KR)
(74) Representative: Gulde & Partner
(86) International application number: PCT/KR2023/006100
(87) International publication number: WO 2023/214817

(57) **Abstract**

The disclosure relates to a 5G or 6G communication system for supporting a higher data transmission rate. According to the present disclosure, if the 5G communication system becomes a synchronization source (sync source) so that a synchronization service is provided to a terminal, whether to provide the service is determined on the basis of subscription information about the terminal and the service provision can be controlled.

## Description

### [Technical Field]

The disclosure relates to a method of providing time synchronization between wireless terminals in a 5G system (5GS) in a wireless communication system. For example, the disclosure relates to a method of providing time synchronization between wireless terminals using UE subscription information.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulationrelated requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and twostep random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterialbased lenses and antennas for improving coverage of terahertz band signals, highdimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing endto-end AI support functions, and next-generation distributed computing technology for implementing services at levels of complexity exceeding the limit of UE operation capability by utilizing ultra-high-performance communication and computing resources.

The need for a method for a 5G system to provide a time synchronization service to a terminal as a synchronization source has arisen.

### [Disclosure of Invention]

### [Technical Problem]

When a 5G system (5GS) of a wireless communication system becomes a synchronization source and provides a time synchronization service to terminals, a method of utilizing UE subscription information is required.

### [Solution to Problem]

In order to solve the above problems, according to an embodiment of the disclosure, a method performed by a time sensitive communication and time synchronization function (TSCTSF) device in a wireless communication system includes acquiring subscription data related to a time synchronization service for a terminal from a unified data management (UDM) device in order to provide a time synchronization service; and identifying at least one of information on whether a 5G access stratum (AS)-based time synchronization service is supported, information on whether a (g)precision time protocol)(PTP)-based time synchronization service is supported, time synchronization error budget information, allowed area information for the terminal, or allowed time information for the terminal, based on the subscription data related to the time synchronization service.

In another embodiment of the disclosure, a method performed by an access and mobility management function (AMF) device in a wireless communication system includes acquiring subscription data related to a time synchronization service for a terminal from a unified data management (UDM) device in order to provide a time synchronization service; and identifying at least one of information on whether a 5G access stratum (AS)-based time synchronization service is supported, information on whether a (g)precision time protocol (PTP)-based time synchronization service is supported, time synchronization error budget information, allowed area information for the terminal, or allowed time information for the terminal, based on the subscription data related to the time synchronization service.

In another embodiment of the disclosure, a time sensitive communication and time synchronization function (TSCTSF) device in a wireless communication system includes a transceiver; and a controller configured to control to acquire subscription data related to a time synchronization service for a terminal from a unified data management (UDM) device in order to provide a time synchronization service and to identify at least one of information on whether a 5G access stratum (AS)-based time synchronization service is supported, information on whether a (g)precision time protocol)(PTP)-based time synchronization service is supported, time synchronization error budget information, allowed area information for the terminal, or allowed time information for the terminal, based on the subscription data related to the time synchronization service.

In another embodiment of the disclosure, an access and mobility management function (AMF) device in a wireless communication system includes a transceiver; and a controller configured to control to acquire subscription data related to a time synchronization service for a terminal from a unified data management (UDM) device in order to provide a time synchronization service and to identify at least one of information on whether a 5G access stratum (AS)-based time synchronization service is supported, information on whether a (g)precision time protocol)(PTP)-based time synchronization service is supported, time synchronization error budget information, allowed area information for the terminal, or allowed time information for the terminal, based on the subscription data related to the time synchronization service.

### [Advantageous Effects of Invention]

According to an embodiment of the disclosure, in the case that a 5GS becomes a sync source and provides a sync service to an UE, it is possible to control whether to provide a service based on UE subscription information.

### [Brief Description of Drawings]

FIG. 1 is a diagram illustrating a 5GS sync service according to an embodiment of the disclosure.
FIG. 2 illustrates a network structure for supporting a 5GS sync service according to an embodiment of the disclosure.
FIG. 3 is a signal flow diagram illustrating signaling for a 5GS sync service according to an embodiment of the disclosure.
FIG. 4A is a sequence diagram illustrating a UE subscription information-based access stratum (AS) sync service method according to an embodiment of the disclosure.
FIG. 4B is a sequence diagram illustrating a UE subscription information-based access stratum (AS) sync service method according to an embodiment of the disclosure.
FIG. 5A is a sequence diagram illustrating a UE subscription information-based (g)precision time protocol (PTP) sync service method according to an embodiment of the disclosure.
FIG. 5B is a sequence diagram illustrating a UE subscription information-based (g)precision time protocol (PTP) sync service method according to an embodiment of the disclosure.
FIG. 6 is a block diagram illustrating a structure of an entity according to an embodiment of the disclosure.

### [Mode for the Invention]

Hereinafter, an operating principle of the disclosure will be described in detail with reference to the accompanying drawings. In the following description, in describing the disclosure, in the case that it is determined that a detailed description of a related well-known function or constitution may unnecessarily obscure the gist of the disclosure, a detailed description thereof will be omitted. Terms described below are terms defined in consideration of functions in the disclosure, which may vary according to intentions or customs of users and operators. Therefore, the definition should be made based on the content throughout this specification

Hereinafter, a term identifying an access node used in the description, a term indicating network entities, a term indicating messages, a term indicating an interface between network objects, a term indicating various identification information and the like are exemplified for convenience of description. Accordingly, the disclosure is not limited to the terms described below, and other terms indicating an object having an equivalent technical meaning may be used.

Hereinafter, a base station is a subject performing resource allocation of a terminal, and may be at least one of a gNode B, an eNode B, a node B, a base station (BS), a radio access unit, a base station controller, or a node on a network. The terminal may include a user equipment (UE), a mobile station (MS), a cellular phone, a smart phone, a computer, or a multimedia system capable of performing a communication function. In the disclosure, a downlink (DL) is a wireless transmission path of a signal transmitted from a base station to a terminal, and an uplink (UL) is a wireless transmission path of a signal transmitted from a terminal to a base station. Hereinafter, although LTE or LTE-A system may be described as an example, embodiments of the disclosure may be applied to other communication systems having a similar technical background or channel type. For example, 5G mobile communication technology (5G, new radio (NR)) developed after LTE-A may be included in a system to which an embodiment of the disclosure may be applied, and the following 5G may be a concept including existing LTE, LTE-A and other similar services. Further, the disclosure may be applied to other communication systems through some modifications within a range that does not significantly deviate from the scope of the disclosure by the determination of a person having skilled technical knowledge. In this case, it will be understood that each block of signal flow diagrams and combinations of the signal flow diagrams may be performed by computer program instructions.

Because these computer program instructions may be mounted in a processor of a general purpose computer, a special purpose computer, or other programmable data processing equipment, instructions performed by a processor of a computer or other programmable data processing equipment generate a means that performs functions described in the signal flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the signal flow diagram block(s). Because the computer program instructions may be mounted on a computer or other programmable data processing equipment, a series of operation steps are performed on the computer or other programmable data processing equipment to generate a computer-executed process; thus, instructions for performing the computer or other programmable data processing equipment may provide steps for performing functions described in the signal flow diagram block(s).

Further, each block may represent a portion of a module, a segment, or a code including one or more executable instructions for executing a specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function. In this case, a term '-unit' used in this embodiment means software or hardware components such as a field programmable gate array (FPGA) or an application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card. Further, in an embodiment, '-unit' may include one or more processors.

Hereinafter, for convenience of description, the disclosure uses terms and names defined in the 5GS and NR standards, which are standards defined by the 3rd generation partnership project (3GPP) organization among the existing communication standards. However, the disclosure is not limited to the terms and names, but may be equally applied to wireless communication networks according to other standards. For example, the disclosure may be applied to 3GPP 5GS/NR (5th generation mobile communication standard).

In the case of being utilized for applications such as a smart grid, accurate time sync between terminals is required. A sync service may be provided only in a specific region. Outside of this region, there may be no need to provide a service, or a different type of sync service may need to be applied. Further, accurate time sync between terminals is required for factory automation. Accurate time sync between terminals is also required for applications that share audio/video.

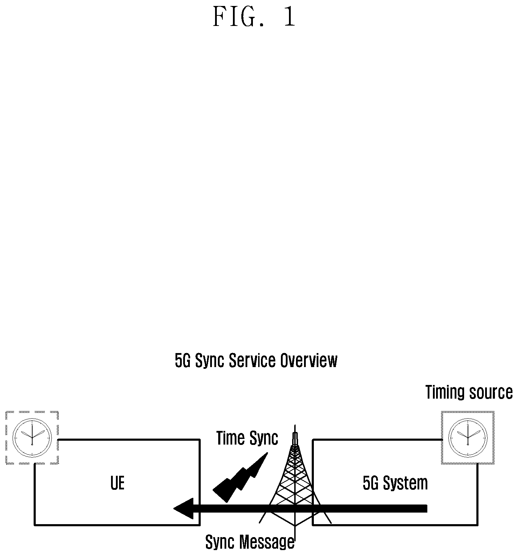

FIG. 1 is a diagram illustrating a 5GS sync service according to an embodiment of the disclosure.

In order to support time synchronization supported by time sensitive networking (TSN) mainly used in an Ethernet-based wired network, in a 3GPP network, the 3GPP network may operate as a single TSN node. All entities in the 3GPP network should be synchronized to a 5G grandmaster (GM) clock. To this end, it may be assumed that a radio access network (RAN) is connected to a 3GPP GM, and it may be assumed that a user plane function (UPF) connected to the RAN by a wired network is synchronized to the 5G GM clock by utilizing a wired network TSN sync method or by using other methods. The RAN and the UE are connected through a 5G air protocol, and in this process, the RAN should additionally provide various functions so as to accurately support sync with the UE (e.g., so that a time error is less than 656ns). These functions may include accurate timing delivery by radio resource control (RRC)/system information block (SIB), finer timing advance (TA) granularity, and propagation delay compensation.

In this way, the 5GS may adjust (e.g., control) transmission of messages such as an RRC or SIB of the RAN to support time synchronization between UEs. For example, the 5GS may control an RAN sync function using RAN parameters. This method may be referred to as an AS-based 5GS sync service. The radio resource control (RRC)/system information block (SIB) transmission frequency for transmitting time information may be increased to a level that satisfies accuracy. The base station may adjust a cycle of giving and receiving messages for measuring a delay time between a specific UE and the base station to and from the RRC to measure a precise delay time, thereby adjusting time synchronization accuracy. Further, the base station may include time information in information broadcasted to all UEs to adjust a transfer cycle to the SIB, thereby adjusting time synchronization accuracy.

Further, the 5GS may support time synchronization between UEs using a sync message. For example, when a synchronization process in a downlink direction is first described, an operation thereof is as follows. All entities in the 3GPP network may be in a state synchronized to a 5G GM clock. In this case, when the UPF receives a sync message, the UPF may include an ingress time stamp based on the 5G GM and link delay with a previous TSN node that is measured/calculated and managed in the sync message and transmit the sync message. The UE may calculate a time that transmits the sync message to an external time sensitive networking (TSN) node based on the 5G GM clock and calculate the difference between the time and an ingress time. The UE may reflect the calculated value as a residence time to a correction field to complete a TSN sync operation. Through this process, the 3GPP network may maintain TSN synchronization so that a time error is less than 1µs.

The UPF may directly generate a sync message based on the 5G GM. In this case, a link delay with the previous TSN node is 0. In this way, the 5GS may transmit a sync message to support time synchronization between UEs. The 5GS may adjust a transmission interval of the sync message to adjust accuracy. This method may be referred to as a (g)precision time protocol (PTP)-based 5GS sync service.

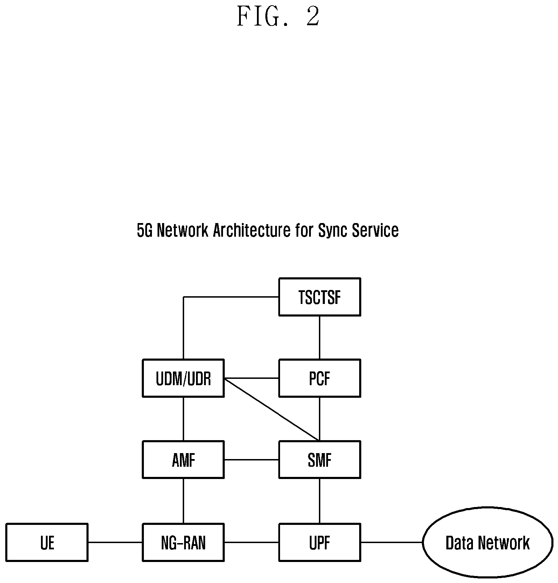

FIG. 2 is a diagram illustrating a network structure for supporting a 5GS sync service according to an embodiment of the disclosure.

In order for the 5GS to become a synchronization source and to provide a sync service to the UE, a time sensitive communications and time synchronization function (TSCTSF) may read management information of a network-side TSN translator (NW-TT) and a device-side TSN translator (DS-TT), and transmit management information to the NW-TT and the DS-TT to change a configuration. In this case, the TSCTSF may acquire/receive subscription information from the UDM and refer to the subscription information. Further, in order to apply requirements for a 5GS sync service for 5GS information to the 5GS system, the TSCTSF may link with a session management function (SMF), access management function (AMF), policy control function (PCF), and unified data repository (UDR). In this case, the SMF and the AMF may refer to subscription information acquired from the UDM. Further, the TSCTSF may store required information in the UDR, and transmit updated information to the UDM/unified data repository (UDR) or the policy control function (PCF) through a notification process. In this way, a (g)PTP-based 5GS sync service may be configured.

Further, the TSCTSF may transmit requirements for a 5GS sync service to the 5G RAN to adjust the RRC or the SIB, thereby supporting time synchronization between UEs. In this case, the TSCTSF may refer to subscription information from the UDM. Further, the TSCTSF may be linked with the PCF, the AMF, and the like. In this case, the SMF or the AMF may refer to subscription information from the UDM. The TSCTSF may control a RAN sync function using a parameter transmitted to the RAN through the AMF. In this way, the 5GS may configure an AS-based 5GS sync service.

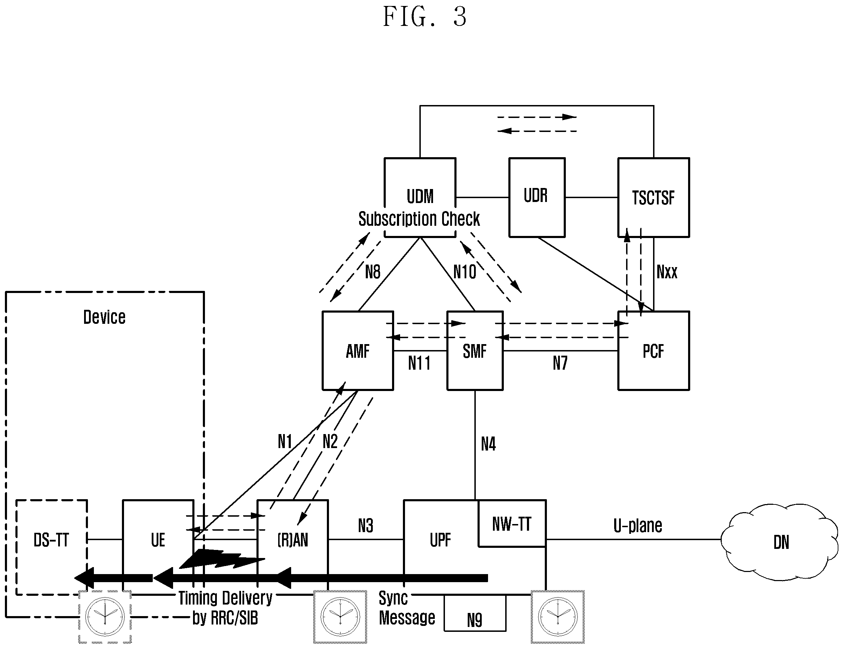

FIG. 3 illustrates a signaling flow for a 5GS sync service according to an embodiment of the disclosure.

The UDM may store subscription information related to a 5GS sync service for each UE. The sync service subscription information that the UE stores in the 5GS may include at least one of the following information.
- AS sync: Whether an AS sync service is supported
- (g)PTP sync: Whether a (g)PTP sync is supported
- gPTP domain: Time domain supported by a (g)PTP sync service, which may be multiple.
- Resiliency: Whether multiplexing of a 5GS sync source of a sync service is supported
- Status: Whether status information of a sync service is supported.
- Accuracy level: Time accuracy (time accuracy level such as a sync error budget and GPS/UPC) supported by a sync service
- Allowed area (supported region information of a sync service such as a cell ID, tracking area, registration area, latitude/longitude, and radius)
- Allowed Time (support time information of a sync service such as a validity time, start time, end time, and valid period from the start time)

In order to provide an AS sync service to the UE based on 5GS sync service UE subscription information, the AMF may check a subscription with the UDM. Further, the TSCTSF may check a subscription with the UDM. The TSCTSF may identify a subscription with the UDM in the following cases.
- When requested by the PCF
- When the TSCTSF is requested directly by the AMF

In order to provide a (g)PTP sync service to the UE based on 5GS sync service UE subscription information, the AMF may check a subscription with the UDM, the SMF may check a subscription with the UDM, or the TSCTSF may check a subscription with the UDM. The TSCTSF may identify a subscription with the UDM in the following cases.
- The TSCTSF checks a subscription with the UDM when requested by the PCF
- The TSCTSF checks a subscription with the UDM when requested by the SMF
- Subscription Check when the TSCTSF is requested directly from the AMF

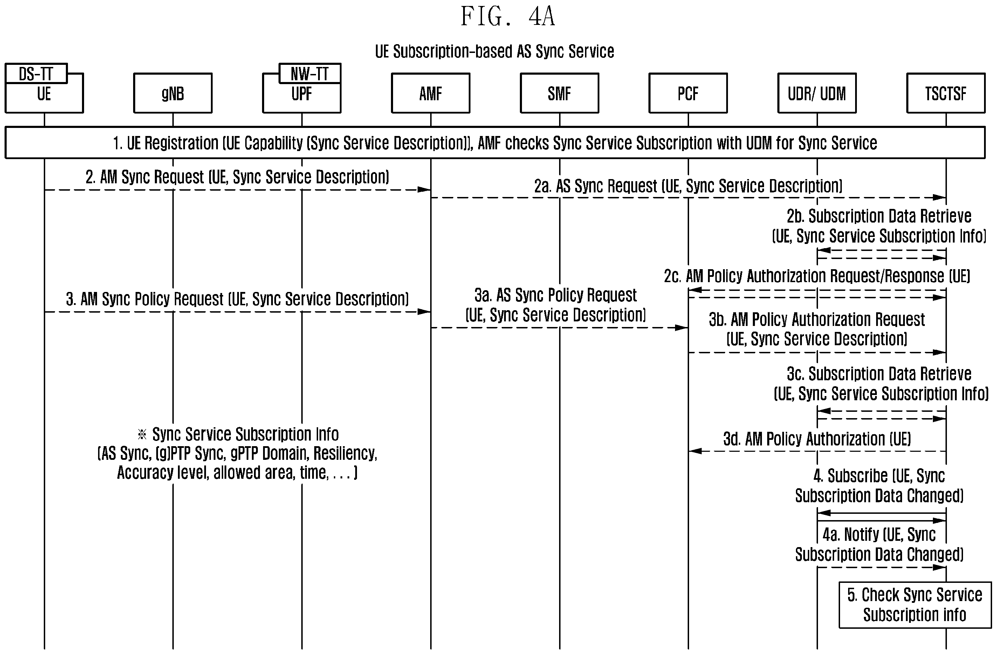

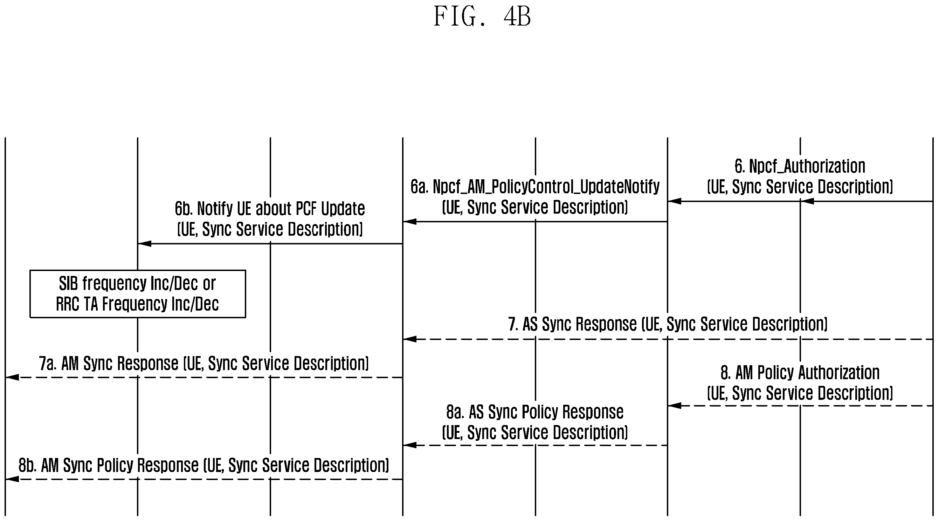

FIGS. 4A and 4B illustrate a UE subscription-based AS sync service method according to an embodiment of the disclosure.

In step 1, the UE performs a registration process in the 5GC. In this case, the UE may include a sync service description. In this process, the AMF may identify a sync service subscription with the UDM. If not subscribed, the UE may not receive a sync service. The sync service description may include at least one of the following information, as in sync service subscription information.
- AS Sync: Whether an AS sync service is supported
- (g)PTP Sync: Whether a (g)PTP sync is supported
- gPTP Domain: Time domain supported by a (g)PTP sync service, which may be multiple.
- Resiliency: Whether multiplexing of a 5GS sync source of a sync service is supported
- Status: Whether status information of a sync service is supported.
- Accuracy level: Time accuracy supported by a sync service (time accuracy level such as a sync error budget and GPS/UPC)
- Allowed area (supported region information of a sync service such as a cell ID, tracking area, registration area, latitude/longitude, and radius)
- Allowed Time (support time information of a sync service such as a validity time, start time, end time, and valid period from the start time)

In step 2, the UE may transmit an access and mobility (AM) sync request to the AMF. The 5GS may not provide an AS-based sync service to the UE immediately after the registration process in step 1, but may provide an AS-based sync service to the UE only after receiving an explicit request in step 2. In this case, the AM sync request may include an UE ID and a sync service description.

In step 2a, the AMF may transmit an AS sync request to the TSCTSF using the information received from the UE in step 2. For example, the AMF may transmit an AS sync request including an UE ID and a sync service description to the TSCTSF.

In step 2b, the TSCTSF may identify a sync service subscription with the UDR/UDM. For example, the TSCTSF may request a sync service subscription to the UDR/UDM. The TSCTSF may receive or acquire a sync service subscription from the UDR/UDM. If not subscribed, the UE may not receive a sync service.

In step 2c, the TSCTSF may perform an AM policy association process with the PCF. For example, the TSCTSF may transmit an AM policy authorization request to the PCF. The TSCTSF may receive an AM policy authorization response from the PCF.

In step 3, the UE may transmit an AM sync policy request to the AMF. After the registration process in step 1, the 5GS may not immediately provide an AS-based sync service to the UE, but may provide an AS-based sync service to the UE only after receiving an explicit request in step 2. In this case, the AM sync request may include an UE ID and a sync service description. Step 3 may be used instead of step 2. Alternatively, step 3 may be used in conjunction with step 2.

In step 3a, the AMF may transmit an AS sync policy request to the PCF using information received from the UE in step 3. For example, the AMF may transmit an AS sync policy request including an UE ID and a sync service description to the PCF.

In step 3b, the PCF may transmit an AM policy authorization request to the TSCTSF using information received from the AMF in step 3a.

In step 3c, the TSCTSF may identify a sync service subscription with the UDR/UDM. If not subscribed, the UE may not receive a sync service.

In step 3d, the TSCTSF may transmit an AM policy authorization response to the PCF.

In step 4, the TSCTSF may transmit a request to the UDR/UDM to notify in the case that there is a change in sync subscription data, and receive a response to the request from the UDR/UDM.

In step 4a, when a change has occurred in sync subscription data, the UDR/UDM may notify the TSCTSF of the above content.

In step 5, the TSCTSF may identify whether to provide an AS sync service to the UE based on the sync subscription information received from the UDM.

In step 6, the TSCTSF may transmit an Npcf_Authorization message to the PCF. For example, the TSCTSF may transmit an Npcf_Authorization message to the PCF to request the UE to provide an AS sync service. The request may include an UE ID and a sync service description.

In step 6a, the PCF may transmit an Npcf_AM_PolicyControl_UpdateNotify message to the AMF using the information received from the TSCTSF in step 6. For example, the Npcf_AM_PolicyControl_UpdateNotify message may include an UE ID and a sync service description.

In step 6b, the AMF may transmit a message to the RAN (e.g., gNB) so as to provide an AS sync service to the UE using the information received from the PCF in step 6a. The RAN that has received the message may increase/decrease an SIB cycle or increase/decrease a measurement cycle for RRC TA to provide an AS-based sync service to the UE. Specifically, as described above, the RAN may adjust (e.g., control) transmission of messages such as the RRC or the SIB to support time synchronization between UEs. For example, the RAN may increase a transmission frequency of the RRC or the SIB for transmitting time information to a level that satisfies accuracy. The RAN may adjust a cycle of giving and receiving messages for measuring a delay time between a specific UE and the base station to and from the RRC to measure a precise delay time, thereby adjusting time synchronization accuracy. Alternatively, the RAN may include time information in information broadcasted to all UEs to adjust a transfer cycle to the SIB, thereby adjusting time synchronization accuracy.

In this case, after identifying whether the AMF may provide an AS sync service from the UDM in step 1, the AMF may omit steps 2 to 6a, and configure an AS sync service in the RAN in step 6b based on the AS sync service description received from the UDM.

In step 7, the TSCTSF may transmit an AS sync response to the AMF in response to step 2a. The response message may include an UE ID and a sync service description.

In step 7a, the AMF may transmit an AM sync response using the information received from the TSCTF in step 7. The response message may correspond to a response to the request message transmitted in step 2.

In step 8, the TSCTSF may transmit an AM policy authorization message to the PCF in response to the request message transmitted in step 3b. The message may include an UE ID and a sync service description.

In step 8a, the PCF may transmit an AS sync policy response using the information received from the TSCTF in step 8. The response message may correspond to a response to the request message transmitted in step 3a.

In step 8b, the AMF may transmit an AM sync policy response using the information received from the PCF in step 8a. The response message may correspond to a response to the request message transmitted in step 3.

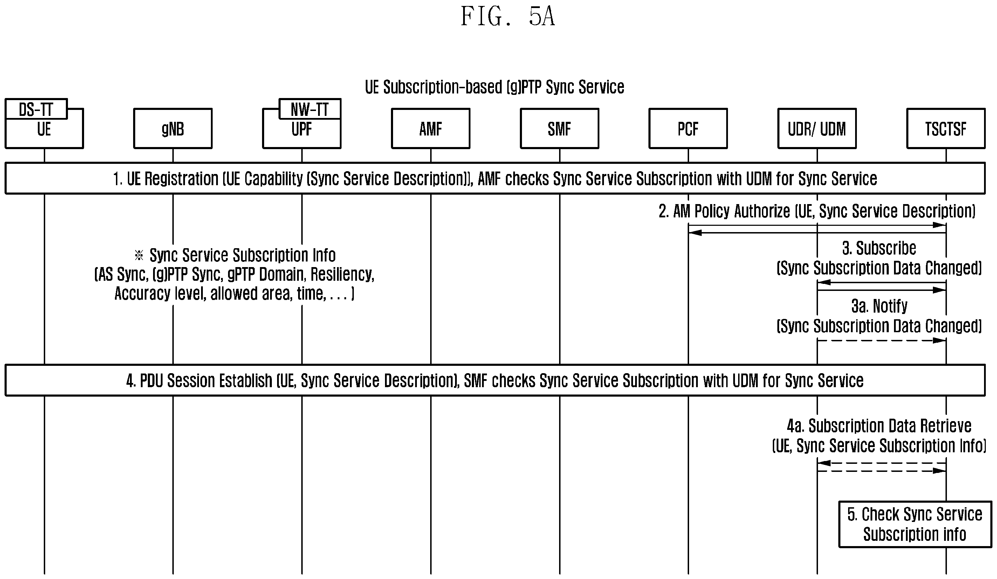

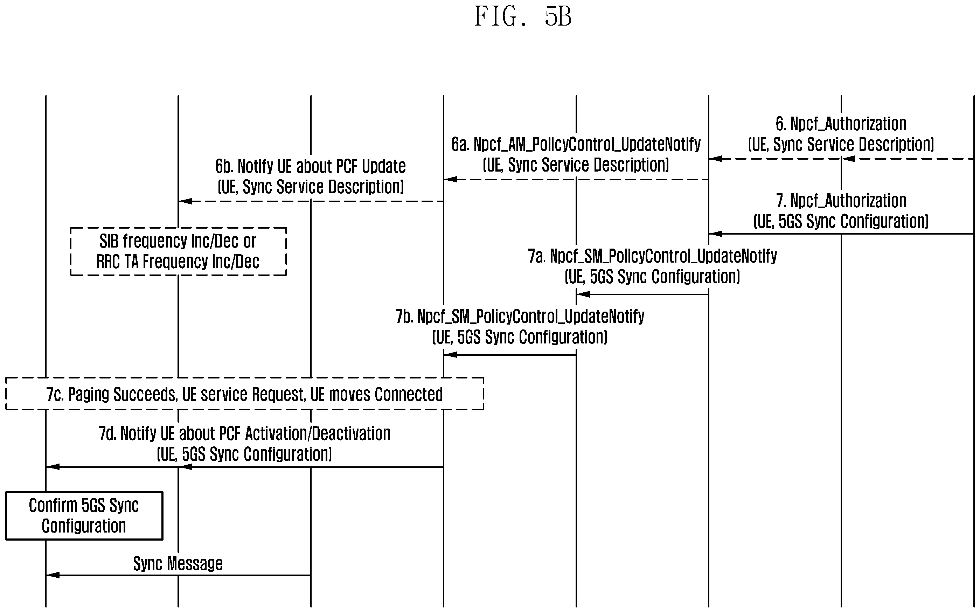

FIGS. 5A and 5B are sequence diagrams illustrating a UE subscription-based (g)PTP sync service method according to an embodiment of the disclosure.

In step 1, the UE may perform a registration process in the 5GC. In this case, a registration message from the UE may include a sync service description. In this process, the AMF may identify a sync service subscription with the UDM. If not subscribed, the UE may not receive a sync service. The sync service description may include at least one of the following information, as in sync service subscription information.
- AS Sync: Whether an AS sync service is supported
- (g)PTP Sync: Whether a (g)PTP sync is supported
- gPTP Domain: Time domain supported by a (g)PTP sync service, which may be multiple.
- Resiliency: Whether multiplexing of a sync source of the 5GS of a sync service is supported
- Status: Whether a sync service supports status information.
- Accuracy level: Time accuracy supported by a sync service (time accuracy level such as sync error budget and GPS/UPC)
- Allowed area (supported region information of a sync service such as a cell ID, tracking area, registration area, latitude/longitude, and radius)
- Allowed Time (support time information of a sync service such as a validity time, start time, end time, and valid period from the start time)

In step 2, the PCF may perform AM policy authorization with the TSCTSF. In this case, at least one message for the AM policy authorization may include an UE ID and a sync service description.

In step 3, in the case that there is a change in sync subscription data, the TSCTSF may transmit a request to the UDM to notify. The TSCTSF may receive a response to the request from the UDM.

In step 3a, when a change has occurred in sync subscription data, the UDM may notify the TSCTSF of the change.

In step 4, the UE may perform a PDU session establishment process with the 5GS. In this case, the PDU session establishment message from the UE may include a sync service description. In this process, the SMF may identify a sync service subscription with the UDM. If not subscribed, the UE may not receive a sync service.

In step 4a, the TSCTSF may identify a sync service subscription with the UDM. If not subscribed, the UE may not receive a sync service.

In step 5, the TSCTSF may identify whether to provide an AS sync service to the UE based on sync subscription information received from the UDM. For example, the (g)PTP sync service presupposes provision of the AS sync service. Therefore, the TSCTSF may first identify whether to provide the AS sync service. The TSCTSF may identify whether to provide a (g)PTP sync service.

In step 6, the TSCTSF may transmit an Npcf_Authorization message to the PCF in order to transmit a request that provides an AS sync service to the UE. The request may include an UE ID and a sync service description. For example, the TSCTSF may transmit an Npcf_Authorization message to the PCF via the UDR.

In step 6a, the PCF may transmit an Npcf_AM_PolicyControl_UpdateNotify message to the AMF using the information received from the TSCTSF in step 6.

In step 6b, the AMF may transmit a message to the RAN (e.g., gNB) so as to provide the AS sync service to the UE using the information received from the PCF in step 6a. The RAN that has received the message may increase/decrease an SIB cycle or increase/decrease a measurement cycle for RRC TA to provide an AS-based sync service to the UE. Specifically, as described above, the RAN may adjust (e.g., control) transmission of messages such as the RRC or the SIB to support time synchronization between UEs. For example, the RAN may increase a transmission frequency of the RRC or the SIB for transmitting time information to a level that satisfies accuracy. The RAN may adjust a cycle of giving and receiving messages for measuring a delay time between a specific UE and the base station to and from the RRC to measure a precise delay time, thereby adjusting time synchronization accuracy. Alternatively, the RAN may include time information in information broadcasted to all UEs to adjust a transfer cycle to the SIB, thereby adjusting time synchronization accuracy.

In step 7, the TSCTSF may transmit a configuration request for a (g)PTP sync service to the PCF. The message may include an UE ID and a sync service configuration. The sync service configuration may be configuration information for a (g)PTP sync in a sync service description, and include a gPTP domain and a sync message transfer cycle. For example, the TSCTSF may identify whether to provide a (g)PTP sync service in step 7. The TSCTSF may transmit a configuration request for the (g)PTP sync service.

In step 7a, the PCF may transmit an Npcf_SM_PolicyControl_UpdateNotify message to the SMF using the information received from the TSCTSF in step 7. The message may include an UE ID and a sync service configuration received by the PCF from the TSCTSF.

In step 7b, the SMF may transmit a 5GS sync configuration request to the AMF using the information received from the PCF in step 7a. The request message may include an UE ID and a sync service configuration received by the SMF from the PCF.

In step 7c, in the case that the UE is in an idle state, the AMF may perform a paging process to change the state of the UE to a connected state.

In step 7d, the AMF may transmit a 5GS sync configuration request to the UE using the information received from the SMF in step 7b. The UE that has received the request may configure DS-TT or other necessary information according to the 5GS sync configuration information. Thereafter, the 5GS may provide a (g)PTP sync service through the sync message to the UE.

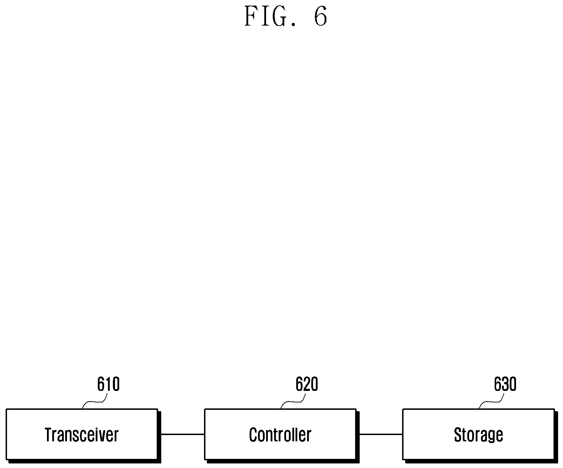

FIG. 6 is a block diagram illustrating a structure of an entity according to an embodiment of the disclosure. The entity may be a core network entity of the 5GS. For example, the entity may be a TSCTSF entity for providing a sync service to the UE.

With reference to FIG. 6, the entity may include a transceiver 610, a controller 620, and a storage 630. In the disclosure, the controller may be defined as a circuit, an application specific integrated circuit, or at least one processor.

The transceiver 610 may transmit and receive signals to and from another network entity. The transceiver 610 may transmit and receive signals/messages to and from, for example, the AMF, SMF, PCF, and UDR/UDM.

The controller 620 may control the overall operation of the entity according to an embodiment proposed in the disclosure. For example, the controller 620 may control the signal flow between each block to perform an operation according to the signal flow diagram described above. Specifically, the controller 620 may identify whether to provide a sync service to the UE based on the received information. The controller 620 may provide a sync service to the UE based on the identification result.

The storage 630 may store at least one of information transmitted and received through the transceiver 610 or information generated through the controller 620. For example, the storage 630 may store the received sync service subscription information of the UE.

Methods according to the embodiments described in the claims or specifications of the disclosure may be implemented in the form of hardware, software, or a combination of hardware and software.

In the case of being implemented in software, a computer readable storage medium storing one or more programs (software modules) may be provided. One or more programs stored in the computer readable storage medium are configured for execution by one or more processors in an electronic device. The one or more programs include instructions for causing an electronic device to execute methods according to embodiments described in a claim or specification of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), any other form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide LAN (WLAN), or storage area network (SAN), or a communication network composed of a combination thereof. Such a storage device may access to a device implementing an embodiment of the disclosure through an external port. Further, a separate storage device on a communication network may access to a device implementing the embodiment of the disclosure.

In the specific embodiments of the disclosure described above, components included in the disclosure are expressed in the singular or plural according to the presented specific embodiments. However, the singular or plural expression is appropriately selected for a situation presented for convenience of description, and the disclosure is not limited to the singular or plural components, and even if a component is represented in the plural, it may be composed of the singular, or even if a component is represented in the singular, it may be composed of the plural.

In the detailed description of the disclosure, although specific embodiments have been described, various modifications are possible without departing from the scope of the disclosure. Therefore, the scope of the disclosure should not be limited to the described embodiments and should be defined by the claims described below as well as equivalents to the claims.

## Claims

1. A method performed by a time sensitive communication and time synchronization function (TSCTSF) device in a wireless communication system, the method comprising:
acquiring subscription data related to a time synchronization service for a terminal from a unified data management (UDM) device in order to provide a time synchronization service; and
identifying at least one of information on whether a 5G access stratum (AS)-based time synchronization service is supported, information on whether a (g)precision time protocol (PTP)-based time synchronization service is supported, time synchronization error budget information, allowed area information for the terminal, or allowed time information for the terminal, based on the subscription data related to the time synchronization service.

2. The method of claim 1, further comprising controlling a 5G AS-based time synchronization service for the terminal based on the at least one identified information.

3. The method of claim 1, further comprising controlling a (g)PTP-based time synchronization service for the terminal based on the at least one identified information.

4. The method of claim 1, wherein in the case that a request is received from a policy control function (PCF) device in relation to protocol data unit (PDU) session establishment for the terminal, subscription data related to the time synchronization service is acquired from the UDM device.

5. A method performed by an access and mobility management function (AMF) device in a wireless communication system, the method comprising:
acquiring subscription data related to a time synchronization service for a terminal from a unified data management (UDM) device in order to provide a time synchronization service; and
identifying at least one of information on whether a 5G access stratum (AS)-based time synchronization service is supported, information on whether a (g)precision time protocol (PTP)-based time synchronization service is supported, time synchronization error budget information, allowed area information for the terminal, or allowed time information for the terminal, based on the subscription data related to the time synchronization service.

6. The method of claim 5, further comprising:
determining to configure a 5G AS-based time synchronization service for the terminal based on the at least one identified information; and
transmitting a message for configuring the 5G AS-based time synchronization service to the base station.

7. The method of claim 5, wherein the subscription data related to the time synchronization service further comprises (g)PTP domain information.

8. A time sensitive communication and time synchronization function (TSCTSF) device in a wireless communication system, the TSCTSF device comprising:
a transceiver; and
a controller configured to control to:
acquire subscription data related to a time synchronization service for a terminal from a unified data management (UDM) device in order to provide a time synchronization service, and
identify at least one of information on whether a 5G access stratum (AS)-based time synchronization service is supported, information on whether a (g)precision time protocol (PTP)-based time synchronization service is supported, time synchronization error budget information, allowed area information for the terminal, or allowed time information for the terminal, based on the subscription data related to the time synchronization service.

9. The TSCTSF device of claim 8, wherein the controller is configured to control a 5G AS-based time synchronization service for the terminal based on the at least one identified information.

10. The TSCTSF device of claim 8, wherein the controller is configured to control (g)PTP-based time synchronization service for the terminal based on the at least one identified information.

11. The TSCTSF device of claim 8, wherein in the case that a request is received from a policy control function (PCF) device in relation to protocol data unit (PDU) session establishment for the terminal, subscription data related to the time synchronization service is acquired from the UDM device.

12. The TSCTSF device of claim 8, wherein the subscription data related to the time synchronization service further comprises (g)PTP domain information.

13. An access and mobility management function (AMF) device in a wireless communication system, the AMF device comprising:
a transceiver; and
a controller configured to control to:
acquire subscription data related to a time synchronization service for a terminal from a unified data management (UDM) device in order to provide a time synchronization service, and
identify at least one of information on whether a 5G access stratum (AS)-based time synchronization service is supported, information on whether a (g)precision time protocol (PTP)-based time synchronization service is supported, time synchronization error budget information, allowed area information for the terminal, or allowed time information for the terminal, based on the subscription data related to the time synchronization service.

14. The AMF device of claim 13, wherein the controller is configured to control to:
determine to configure a 5G AS-based time synchronization service for the terminal based on the at least one identified information, and
transmit a message for establishing the SGAS-based time synchronization service to the base station.

15. The AMF device of claim 13, wherein the subscription data related to the time synchronization service further comprises (g)PTP domain information.
